# EUROPÄISCHE PATENTSCHRIFT

(11) **EP 1 878 333 B1**
(45) Veröffentlichungstag und Bekanntmachung des Hinweises auf die Patenterteilung: **25.08.2010**
(21) Anmeldenummer: 07108150.9
(22) Anmeldetag: 14.05.2007
(51) Int. Cl.: A01F 15/14

(54) **Bindevorrichtung an landwirtschaftliche Rundballenpressen**
Binding device on agricultural round balers
Dispositif de commande sur une presse agricole à balles rondes

(30) Priorität: 14.07.2006 DE 102006033076
(43) Veröffentlichungstag der Anmeldung: 16.01.2008
(73) Patentinhaber: Usines CLAAS France S.A.S., 57148 St. Rémy/Woippy CEDEX (FR)
(72) Erfinder: Mesmer, Denis, 57320, Bouzonville (FR); Guthmann, Peter, 57000, Metz (FR); Waechter, Julien, 57640, Failly (FR); Nicolas, Fabrice, 57420, Fleury (FR)
(74) Vertreter: Ellerbrächter, Dirk

(56) Entgegenhaltungen:
- DE-A1- 2 645 762
- US-A- 4 624 179
- US-A- 5 388 504

## Beschreibung

Die Erfindung bezieht sich auf eine Bindevorrichtung an landwirtschaftlichen Rundballenpressen, nach dem Oberbegriff des Patentanspruchs 1.

Bereits aus der DE OS 26 45 762 ist eine Bindevorrichtung für eine Rundballenpresse bekannt, wobei die Führungseinrichtung mittels eines Antriebsmotors stufenlos verfahrbar ist. Die Einführung des Bindegarns zu Beginn des Bindevorgangs erfolgt dabei an einem Ende des Einzugspaltes. Da die Vorschubbewegung der Garnführungseinrichtung durch den Antriebsmotor unabhängig von der tatsächlichen Umlaufgeschwindigkeit des Ballens während des Bindevorgangs ist, kann sich in nachteiliger Weise von Ballenbindung zu Ballenbindung eine nicht homogene Verteilung der vorab definierten Bindegarnumwicklungszahlen ergeben, was letztendlich zu einem höheren Bindegarnverbrauch führen kann.

Es ist ferner aus der DE OS 26 40 563 eine Bindevorrichtung bekannt, bei der die Bezugsgröße für die Schwenkbewegung der Garnführungseinrichtung die Einzugslänge des Bindematerials ist. Eine derartige Bindevorrichtung erbringt die Einhaltung vorgegebener Windungsabstände unabhängig von Änderungen in der tatsächlichen Umlaufgeschwindigkeit des Rundballens während des Bindevorgangs. Nachteilig daran ist, dass die vorgegebenen Windungsabstände dann nur in Abhängigkeit vom vorher festegelegten Ballendurchmesser erfolgen, ohne Einbeziehung der tatsächlichen Ballendrehzahl bzw. Ballenumlaufgeschwindigkeit des jeweils fertig gepressten Ballens, die wegen Schlupfes des Ballens während jedes Ballenbindevorgangs unterschiedlich ausfallen kann, so dass sich von einem Ballenbindevorgang zum nächsten eine ungenaue Bindegarnverteilung ergeben kann und dadurch eine schlechte Ballenumhüllung entsteht, was zu losen Ballen oder dazu führen kann, dass die vorab bestimmte Bindegarnlänge von vornherein um ein gewisses Maß verlängert wird, um die beschriebenen Nachteile zu vermeiden.

Eine optimierte Bindegarnverteilung auf der Umlauffläche des fertig gepressten Ballens und ein daraus resultierender verminderter Bindegarnverbrauch können letztlich auch mit dieser Bindevorrichtung nicht gewährleistet werden.

US-A-4624 179 offenbart eine Rundballenpresse wobei die Bindeeinrichtung gesteuert wird mit Berücksichtigung der Geschwindigkeit der Ballenförmungsmittel.

Es ist daher Aufgabe der Erfindung, die Nachteile des zitierten Standes der Technik zu vermeiden und eine optimale Bindegarnverteilung und damit einen optimalen Bindgarnverbrauch zu gewährleisten.

Diese Aufgabe wird erfindungsgemäß durch die kennzeichnenden Merkmale des Patentanspruchs 1 gelöst, während gemäß den kennzeichnenden Merkmalen des Patentanspruchs 12 ein die Aufgabe lösendes Verfahren aufgezeigt wird. In den weiteren Patentansprüchen sind Merkmale aufgeführt, die diese Lösungen in vorteilhafter Weise weiterentwickeln.

Indem Mittel zur Steuerung der Bindegarnverteilung in Abhängigkeit von der Ballenumfangsgeschwindigkeit des fertig gepressten Ballens vorgesehen sind, wird sichergestellt, dass die vorab definierte Bindegarnverteilung, wie auch die Einhaltung der gewünschten Windungsabstände eingehalten werden können, dadurch, dass nun während des Bindevorgangs auftretende Schwankungen in der Ballenumlaufgeschwindigkeit eine Berücksichtigung finden.

In vorteilhafter Weiterbildung der Erfindung sind die Mittel von zumindest einem die Garnführungseinrichtung entlang des Ballenumfangs führenden Stellmittel und einer diesen ansteuernden Steuereinrichtung gebildet, wodurch vorteilhaft, die Position der Garnführungsvorrichtung genau bestimmbar ist, so dass eine optimale Bindegarnverteilung auf der Umfangsfläche des fertig gepressten Ballens erfolgen kann. Um eine stufenlose Positionierung der Garnführungsvorrichtung zu erreichen, ist das Stellmittel vorzugsweise als Elektromotor ausgeführt, so dass insbesondere in den Randbereichen der Ballen eine optimale Bindegarnverteilung erreichbar ist.

Damit eine nahezu exakte die vorab festgelegten Windungsabstände berücksichtigende Bindegarnverteilung erreicht werden kann, wird die Vorschubgeschwindigkeit der Garnführungsvorrichtung in Abhängigkeit von der Ballenumfangsgeschwindigkeit, dem gemessenen Ballendurchmesser sowie der gewünschten Bindegarnumwicklungszahl ermittelt, so dass die Bindegarnverteilung nicht allein auf angenommene Werte beruht.

lm einfachsten Fall kann die Ballenumlaufgeschwindigkeit des fertig gepressten Ballens mittels wenigstens eines an sich bekannten Sensors ermittelt und einer Auswerteelektronik als Signal zugeleitet werden, die dieses Signal in eine Rechengröße umsetzt und zur Steuerung der Garnführungseinrichtung nutzbar macht, wobei vorzugsweise die nahezu exakte Ballendrehzahl des fertig gepressten Ballens während des Bindevorgangs die Rechengröße bildet.

In vorteilhafter Weise ist der wenigstens eine Sensor als eine mit einem Pressmittel in Kontakt stehende nicht angetriebene Walze oder als ein mit dem Ballen in Kontakt stehendes Messrad ausgeführt, so dass einerseits die in einer Rundballenpresse mit variablen Ballenpressraum vorhandenen nicht angetriebenen Walzen, die mit dem als Pressbänder ausgeführten Pressmittel in Kontakt stehen, als Sensor nutzbar sind oder andererseits durch Anordnung eines Messrades im Pressraum mit geringem technischen Aufwand die Ballengeschwindigkeit erfassbar ist.

Demgegenüber kann der Sensor als eine mit dem fertig gepressten Ballen in Kontakt stehende nicht angetriebene Walze ausgeführt sein, so dass vorteilhaft in Rundballenpressen mit fester Ballenpresskammer auf technisch einfache Weise die tatsächliche Ballenumfangsgeschwindigkeit des fertig gepressten Ballens erfassbar ist.

Zur Entlastung des Bedieners ist der Rundballenpresse zur Einstellung des gewünschten Ballendurchmessers eine Bedieneinrichtung zugeordnet, die vorzugsweise von der Zugmaschine der Rundballenpresse bedienbar ist.

Ein besonders vorteilhaftes Verfahren zur Steuerung der Bindegarnverteitung unter Nutzung der Bindevorrichtung sieht vor, dass die Bindegarnverteilung auf der Umfangsfläche des Ballens in Abhängigkeit von dessen Ballenumlaufgeschwindigkeit gesteuert wird, so dass selbst bei auftretendem Schlupf des Ballens während des Bindevorgangs ein die gewünschten Windungsabstände berücksichtigende Bindegarnverteilung erreichbar ist.

Eine besonders vorteilhafte Weiterbildung des Verfahrens wird dann erreicht, wenn nach Erreichen des vorab definierten Solldurchmessers des Ballens, ein Sensor kontinuierlich die tatsächliche Ballenumfangsgeschwindigkeit des fertig gepressten Ballen ermittelt, eine Auswertelektronik die ermittelten Sensordaten erfasst und in eine Rechengröße, vorzugsweise in die nahezu exakte Ballendrehzahl umsetzt, die Auswerteeinheit kontinuierlich aus der Rechengröße und mindestens den Werten des tatsächlichen Ballendurchmessers und einer vorab definierten Bindegarnumwicklungszahl bzw. der gewünschten Windungsabstände durch einen wählbaren Algorithmus die entsprechende Vorschubgeschwindigkeit der Garnführungseinrichtung errechnet und eine Steuereinrichtung mittels eines Stellzylinders die Garnführungseinrichtung entlang der Ballenumfangsfläche entsprechend der errechneten Vorschubgeschwindigkeit betreibt. Dies hat den Vorteil, dass die Bindegarnverteilung stufenlos der nahezu tatsächlichen Ballenumfangsgeschwindigkeit des fertig gepressten Ballen angepasst werden kann, so dass jeder Rundballen eine Bindung aufweist.

Weitere vorteilhafte Ausgestaltungen sind Gegenstand weiterer Unteransprüche und werden anhand der nachfolgenden Zeichnung näher erläutert.

Es zeigt:

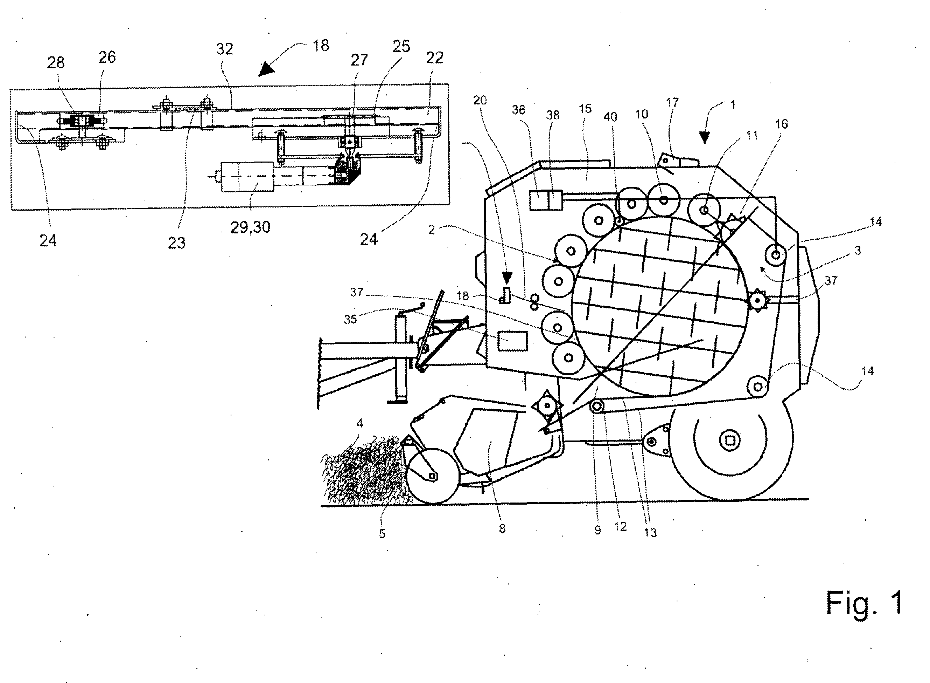

- Figur 1:: eine Rundballenpresse in Seitenansicht und Schnittdarstellung

Fig. 1 zeigt eine an sich bekannte landwirtschaftliche Rundballenpresse 1 einerseits mit einer konstanten Presskammer 2 und andererseits mit einer variablen Presskammer 3 in einer Seitenansicht und einer Schnittdarstellung. Die Rundballenpresse 1 dient der Aufnahme und dem Pressen von zu einem als Schwad 4 auf dem Boden 5 abgelegten Erntegut 6 zu einem Rundballen 7. Die Aufnahme des auf dem Boden 5 abgelegten Erntegutschwads 4 erfolgt über eine Erntegutaufnahmevorrichtung 8, die das Erntegut 6 über eine Gutzuführöffnung 9 der Presskammer 2, 3 zuführt. Die Presskammer 2, 3 wird umfangsseitig von Pressmitteln begrenzt. Einerseits sind die Pressmittel als im Uhrzeigersinn angetriebene Presswalzen 10 ausgeführt, wobei die Drehachsen 11 der Presswalzen 10 parallel zueinander verlaufen und auf einem Kreisbogen liegen. Andererseits sind die Pressmittel 10, 13 als entgegen dem Uhrzeigersinn über Walzen 12 angetriebene Pressbänder 13 ausgeführt, die mit geringem Abstand parallel nebeneinander verlaufen. Sie werden durch eine Vielzahl von nicht angetriebenen Walzen 14 geführt.

In an sich bekannter Weise ist die Presskammer 2,3 in eine vordere Hälfte 15 und eine rückwärtige Hälfte 16 unterteilt, wobei die Hälften 15, 16 in einem oberen Lager 17 miteinander verbunden sind, so dass die rückwärtige Hälfte 16 der Rundballenpresse 1 zum Auswerfen des Ballens 7 in herkömmlicher Weise aufgeschwenkt werden kann.

Im oberen Bereich der vorderen Pressenhälfte 15 ist eine an sich bekannte Bindevorrichtung 18 vor einem sich über die gesamte Breite der Presskammer erstreckenden Einzugsspaltes 19 für das Bindegarn 20 angeordnet. Die Bindevorrichtung 18 in einer vergrößerten Draufsicht dargestellt, umfasst eine auf einen Rahmengestell 22 hin- und herverfahrbar gelagerte Garnführungseinrichtung 23 mit nicht näher dargestellten Garnführungsösen. In einem gewissen Abstand, beispielhaft ca. 100 mm, von den Seitenwänden 24 ist auf dem Rahmengestell 22 je ein Kettenrad 25, 26 freiliegend auf Wellen 27, 28 gelagert. Die Welle 27 ist nach vom verlängert und an einen Stellzylinder 29, vorliegend einen Elektromotor 30, gekuppelt, der am Rahmengestell 22 befestigt ist. Der Kettentrieb 32 ist dabei so angeordnet, dass er über nicht näher dargestellte Führungselemente die Garnführungseinrichtung 23 bei deren Hin- und Zurückbewegung umschließt. Darüber hinaus besitzt die Bindevorrichtung 18 ein hier nicht näher dargestelltes Abtrennorgan zum Durchtrennen des Bindegarns nach Durchführung eines Bindevorgangs.

Vor dem Start eines Bindevorgangs wird die gewünschte Ballendichte bzw. Ballengröße vom Bediener über eine Bedieneinrichtung 35 eingestellt, vorzugsweise erfolgt dabei die Bedienung vom hier nicht dargestellten Zugfahrzeug der Rundballenpresse 1 aus. Zur Erfassung der Ballengröße sind an sich bekannte und daher nicht näher dargestellte Ballengröße-Sensoren an der Rundballenpresse 1 vorgesehen. Die von den Ballengröße-Sensoren sensierten Signale werden von einer nicht näher beschriebenen Steuereinrichtung erfasst und mit der gewünschten Ballengröße verglichen. Wenn die Ist-Ballengröße mit der Sollballengröße übereinstimmt, wird dem Bediener der Rundballenpresse 1, über eine bekannte hier nicht dargestellte Anzeigeneinheit auf dem Zugfahrzeug ein Signal zum Stoppen der Ballenpresse gegeben. Die Steuereinrichtung wartet über ein kurzes Intervall, um dem Bediener Zeit zum Stoppen der Vorwärtsbewegung der Rundballenpresse 1 zu geben und steuert dann automatisch eine die Bindevorrichtung 18 ansteuernde Steuereinrichtung 36 an und leitet dann automatisch einen Bindevorgang zum Umwickeln des fertig gepressten Rundballens 7 mit Bindegarn 20 ein. Alternativ kann der Bindevorgang auch manuell durch den Bediener der Rundballenpresse 1 ausgelöst werden.

Bislang konnte zwar die Bindegarnumwicklungszahl für den Bindevorgang entsprechend des Ballendurchmessers vorab gewählt, deren genaue Verteilung auf der Ballenumlauffläche 37 jedoch nicht gesteuert werden. Damit die Bindgarnverteilung mittels der stufenlos verfahrbaren Garnführungseinrichtung 23 auf der Ballenumlauffläche 37 des fertig gepressten Rundballens 7 bei jedem Bindevorgang entsprechend der gewünschten Bindegarnumwicklungszahl optimiert werden kann, sind erfindungsgemäß Mittel vorgesehen, die die Bindegarnverteilung in Abhängigkeit von der nahezu tatsächlichen Ballenumfangsgeschwindigkeit während des Bindevorgangs steuern. Zum Sensieren der nahezu exakten Ballenumfangsgeschwindigkeit sind die Mittel von zumindest einem die Garnführungseinrichtung 23 entlang der Ballenumfangsfläche 37 führenden, als Elektromotor 30 ausgeführten, Stellmittel 29 und einer dieses ansteuernden Steuereinrichtung gebildet, wodurch eine stufenlose Verstellung der Garnführungseinrichtung 23 erreichbar ist und damit eine Optimierung der Bindegarnverteilung erfolgen kann.

Zur kontinuierlichen Erfassung der Umlaufgeschwindigkeit des fertig gepressten Rundballens 7 während des Bindevorgangs ist der Presskammer 2, 3 wenigstens ein Sensor 14, 39, 40 zugeordnet, der mit einer die Garnführungseinrichtung 23 steuernden Steuereinrichtung 36 in Verbindung steht, welcher das erfasste Signal zugeleitet wird. Beispielsweise kann der Sensor 14, 39, 40 als eine nicht angetriebene Walze 14 ausgebildet sein, die mit dem als Pressband 13 ausgeführten Pressmittel unmittelbar in Kontakt steht, so dass bereits in einer Rundballenpresse 7 mit variabler Presskammer 3 vorhandene technische Mittel zum Sensieren der Ballenumlaufgeschwindigkeit nutzbar sind. Der wenigstens eine Sensor 14, 39 40 kann alternativ als ein mit einem fertig gepressten Rundballen 7 in Kontakt stehendes, beispielhaft als Zahnrad ausgeführtes Messrad 39 und/oder als eine mit dem fertig gepressten Rundballen 7 in Kontakt stehende nicht angetriebene Walze 40 ausgeführt sein, so dass in Rundballenpressen 1 mit konstanter Presskammer 2 auf technisch einfache Weise die Ballenumfangsgeschwindigkeit des fertig gepressten Ballens erfassbar und damit zur Steuerung der Garnführungseinrichtung 23 nutzbar ist.

Die durch den wenigstens einen Sensor 14, 39, 40 erfasste Ballenumlaufgeschwindigkeit des gepressten Rundballens 7 wird einer Auswerteelektronik 38 als Signal zugeleitet, die dieses Signal in eine Rechengröße, umsetzt. Vorzugsweise definiert sich die Rechengröße als die nahezu exakte Ballendrehzahl des fertig gepressten Rundballens 7 während des Bindevorgangs. Anhand der ermittelten Ballendrehzahl, dem gemessenen Ballendurchmesser und der gewünschten Bindegamumwicklungszahl ermittelt die Auswerteelektronik 38 die entsprechende exakte Vorschubgeschwindigkeit für das Verfahren der Garnführungseinrichtung 23 entlang der Ballenumfangsfläche 37 und leitet ein diese Vorschubgeschwindigkeit repräsentierendes Signal an die die Garnführungseinrichtung 23 steuernde Steuereinrichtung 36.

Die Bindevorrichtung 18 fördert dabei das Bindegarn 20 mittels der Garnführungseinrichtung 23 über nicht näher dargestellte Leitelemente zwischen zwei benachbarte Walzen 12 bzw. Pressbänder 13 hindurch, so dass das Bindegarn 20 auf die Ballenumlauffläche 37 des fertig gepressten Rundballens 7 geführt wird. Durch die Umlaufgeschwindigkeit des Rundballens 7, wie auch durch die Rotation der Pressmittel 12, 13 wird das Bindegarn 20 mitgenommen. Zunächst verharrt die Garnführungseinrichtung 23 in ihrer Ausgangsposition, um eine vorab definierte Anzahl an Endwindungen auf der Umlauffläche 37 aufzubringen. Unter Vorgabe einer festgelegten Zeit wird die Garnführungseinrichtung 23 dann mit der ermittelten Vorschubgeschwindigkeit zur gegenüberliegenden Endung verfahren, um die gewünschte Anzahl von kreisförmigen Windungen auf der Ballenumlauffläche 37 aufzubringen. An der gegenüberliegenden Endung der Ballenumlauffläche 37 verharrt die Gamführungseinrichtung 23 erneut, um die gewünschte Anzahl von Endwindungen aufzubringen. Denkbar ist auch, dass die Gamführungseinrichtung 23 mehrteilig ausgeführt ist und während des Bindevorgangs jeweils von der Mitte aus zu den Endungen der Ballenumlauffläche 37 hin- und herverfahren werden. Zudem ist die Anzahl der vorhandenen Garnführungsösen 31 variabel.

Gemäß dem erfindungsgemäßen Verfahren zur Steuerung der Bindegarnverteilung wird die Bindegarnverteilung auf der Ballenumlauffläche 37 in Abhängigkeit von der Ballenumlaufgeschwindigkeit gesteuert. Sensiert der wenigstens eine Sensor 14, 39, 40 während des Bindevorgangs beispielsweise durch Schlupf des Rundballens 7 resultierende Schwankungen der Ballenumfaufgeschwindigkeit, errechnet die Auswertelektronik 38 kontinuierlich eine den erfassten Signalen angepasste Vorschubgeschwindigkeit für das Verfahren der Garnführungseinrichtung 23 entlang der Balfenumlauffläche 37, so dass vorteilhaft die nahezu exakte Einhaltung der vorab definierten Windungsabstände auf der Ballenumlauffläche 37 erreicht werden kann.

Bei einer vorteilhaften Ausführung des Verfahrens zur Steuerung der Bindegarnverteilung auf der Ballenumlauffläche sensiert mit Erreichen des vorab durch den Bediener definierten Ballen-Solldurchmessers wenigstens ein Sensor 14, 39, 40 kontinuierlich die Ballenumfangsgeschwindigkeit des fertig gepressten Rundballens 7. Eine damit verbundene Auswertelektronik 38 erfasst die ermittelten Signale und errechnet daraus die Ballendrehzahl des Rundballens 7. Aus den Werten der Ballendrehzahl, des gemessenen Ballendurchmessers sowie der vorab gewünschten Bindegarnumwicklungszahl berechnet die Auswerteelektronik 38 dann kontinuierlich die zur Erreichung der optimalen bzw. gewünschten Bindegarnverteilung notwendige Vorschubgeschwindigkeit mit welcher die Garnführungseinrichtung entlang der Ballenumlauffläche 37 zum Aufbringen der kreisförmigen Windungen verfahren wird. Bei auftretenden Schwankungen in der Ballenumlaufigeschwindigkeit erhält die die Garnführungseinrichtung steuernde Steuereinrichtung 36 entsprechende Signale, die Garnführungseinrichtung schneller bzw. langsamer zu verfahren, um die Schwankungen auszugleichen, so dass jeder gepresste Rundballen 7 eine optimale Bindung aufweist und ein optimaler Bindegarnverbrauch gewährleistet ist.

Nach Vollendung des Bindevorgangs wird das Bindgarn 20 durch eine an sich bekannte hier nicht näher dargestellte Abtrennvorrichtung abgetrennt.

Die Garnführungseinrichtung 23 verharrt in der Endstellung bis zum Auslösen des nächsten Bindevorgangs, um von dort aus die Bindegarnverteilung auf der Ballenumlauffläche 37 zu bewirken, alternativ kann die Garnführungseinrichtung 23 in ihre Ausgangstellung zurückverfahren werden.

Danach wird der fertig umwickelte Rundballen 7 durch das aufwärts Verschwenken der rückwärtigen Pressenhälfte 16 aus dem Pressraum 2, 3 heraus gefördert und auf dem Boden 5 hinter der Rundballenpresse 7 abgelegt.

Im Anschluss an die Ballenablage wird die Erntefahrt fortgesetzt zum Bilden eines neuen mit Bindegarn umhüllten Rundballens.

Es liegt im Rahmen des Könnens eines Fachmanns, die beschriebene Erfindung in nicht dargestellter Weise abzuwandeln oder in anderen als den dargestellten Anwendungsfällen einzusetzen, um die beschriebenen Effekte zu erzielen, ohne dabei den Rahmen der Erfindung zu verlassen.

### Bezugszeichenliste

- 1: landwirtschaftliche Rundballenpresse
- 2: konstante Presskammer
- 3: variable Presskammer
- 4: Schwad
- 5: Boden
- 6: Erntegut
- 7: Rundballen
- 8: Erntegutzuführvorrichtung
- 9: Gutzuführöffnung
- 10: angetriebene Presswalzen
- 11: Drehachsen
- 12: angetriebene Walzen
- 13: Pressband
- 14: nicht angetriebene Walzen
- 15: vordere Hälfte
- 16: rückwärtige Hälfte
- 17: Lager
- 18: Bindevorrichtung
- 19: Einzugsspalt
- 20: Bindegarn

- 22: Rahmengestell
- 23: Gamführungseinrichtung
- 24: Seitenwände
- 25: Kettenrad
- 26: Kettenrad
- 27: Welle
- 28: Welle
- 29: Stellmittel
- 30: Elektromotor

- 32: Kettentrieb
- 35: Bedieneinrichtung
- 36: Steuereinrichtung
- 37: Ballenumfauffläche
- 38: Auswerteelektronik
- 39: Messrad
- 40: nicht angetriebene Walze

## Patentansprüche

1. Bindevorrichtung (18) an einer Rundballenpresse (7) mit einer Presskammer (2,3) zur Aufnahme, Bündelung und Abgabe von landwirtschaftlichen Erntegut (6), welche mittels eines Stellzylinders (29) stufenlos verfahrbar und über einen sich über die gesamte Breite der Presskammer (2,3) erstreckenden Einzugsspalts (19) angeordnet ist, bestehend aus einer auf einer Schiebeführung vor und entlang dem Einzugsspalt (19) gegenläufig verschiebbaren Garnführungseinrichtung (23) und einer ortsfest vor dem Einzugsspalt angeordneten Schneidvorrichtung zum Abschneiden des Bindegarns (20) nach Abschluss des Bindevorgangs,
**dadurch gekennzeichnet,**
**dass** Mittel zur Steuerung der Bindegarnverteitung in Abhängigkeit von der Ballenumfangsgeschwindigkeit während des Bindevorgangs vorgesehen sind.

2. Bindevorrichtung (18) nach Anspruch 1,
**dadurch gekennzeichnet,**
**dass** die Mittel von zumindest einem die Garnführungseinrichtung (23) entlang der Ballenumfangsfläche (37) führenden Stellmittel (29) und einer dieses ansteuernde Steuereinrichtung (36) gebildet sind.

3. Bindevorrichtung (18) nach einem der vorhergehenden Ansprüche,
**dadurch gekennzeichnet,**
**dass** das Stellmittel (29) zur Führung der Garnführungseinrichtung (23) entlang der Ballenumfangsfläche (37) als Elektromotor (30) ausgeführt ist.

4. Bindevorrichtung (18) nach einem der vorhergehenden Ansprüche,
**dadurch gekennzeichnet,**
**dass** das Verfahren der Garnführungseinrichtung (23) in Abhängigkeit von der Ballenumfangsgeschwindigkeit, dem gemessenem Ballendurchmesser sowie der gewünschten Bindergarnumwicklungszahl stufenlos regelbar ist.

5. Bindevorrichtung (18) nach einem der vorhergehenden Ansprüche,
**dadurch gekennzeichnet,**
**dass** die Ballenumfangsgeschwindigkeit des fertig gepressten Rundballens (7) durch zumindest einen Sensor erfasst und einer Auswerteelektronik (38) als Signal zugeführt wird und dieses Signal in eine Rechengröße umsetzbar ist, welche zur Steuerung der Garnführungseinrichtung (23) nutzbar ist.

6. Bindevorrichtung (18) nach Anspruch 5,
**dadurch gekennzeichnet,**
**dass** die Rechengröße die nahezu tatsächliche Ballendrehzahl des fertig gepressten Rundballens (7) während des Bindevorgangs ist.

7. Bindevorrichtung (18) nach einem der vorhergehenden Ansprüche 5 oder 6,
**dadurch gekennzeichnet,**
**dass** der Sensor als eine mit einem Pressmittel in Kontakt stehende nicht angetriebene Walze (14) und/oder als ein mit dem fertig gepressten Rundballen (7) in Kontakt stehendes Messrad (39) ausgeführt ist.

8. Bindevorrichtung (18) nach einem der vorhergehenden Ansprüche 5 bis 7,
**dadurch gekennzeichnet,**
**dass** der Sensor als eine mit dem fertig gepressten Rundballen (7) in Kontakt stehende nicht angetriebene Walze (40) ausgeführt ist.

9. Bindevorrichtung (18) nach einem der vorhergehenden Ansprüche,
**dadurch gekennzeichnet,**
**dass** die Rundballenpresse (1) eine Bedieneinrichtung (35) zur Einstellung des gewünschten Ballendurchmessers umfasst.

10. Bindevorrichtung (18) nach Anspruch 9,
**dadurch gekennzeichnet,**
**dass** die Bedieneinrichtung (35) vom Zugfahrzeug der Rundballenpresse (1) aus bedienbar ist.

11. Bindevorrichtung (18) nach einem der vorhergehenden Ansprüche,
**dadurch gekennzeichnet,**
**dass** die Rundballenpresse (1) mit fester oder variabler Presskammer ausgeführt (2, 3) ist.

12. Verfahren zur Steuerung der Bindegarnverteilung mittels einer Bindevorrichtung (18) an einer Rundballenpresse (7) mit einer Presskammer (2,3) zur Aufnahme, Bündelung und Abgabe von landwirtschaftlichen Erntegut (6), welche mittels eines Stellzylinders (29) stufenlos verfahrbar und über einen sich über die gesamte Breite der Presskammer (2,3) erstreckenden Einzugsspalts (19) angeordnet ist, bestehend aus einer auf einer Schiebeführung vor und entlang dem Einzugsspalt (19) gegenläufig verschiebbaren Garnführungseinrichtung (23) und einer ortsfest vor dem Einzugsspalt angeordneten Schneidvorrichtung zum Abschneiden des Bindegarns (20) nach Abschluss des Bindevorgangs,
**dadurch gekennzeichnet,**
**dass** die Bindegarnverteilung auf der Ballenumfangsfläche (37) des Rundballens in Abhängigkeit von der Ballenumfangsgeschwindigkeit des fertig gepressten Ballens gesteuert wird.

13. Verfahren nach Anspruch 12,
**dadurch gekennzeichnet,**
**dass**
- nach Erreichen eines vorab definierten Solldurchmessers des Rundballens (7),
- der wenigstens eine Sensor kontinuierlich die Ballenumfangsgeschwindigkeit des fertig gepressten Rundballens (7) ermittelt,
- eine Auswertelektronik (38) die ermittelten Sensorsignale erfasst, und in eine Rechengröße umsetzt,
- die Auswertelektronik (38) kontinuierlich aus der Rechengröße, dem Ballendurchmesser des fertig gepressten Rundballens (7), der vorab definierten Bindegarnumwicklungszahl bzw. des Windungsabstandes durch einen wählbaren Algorithmus die Vorschubgeschwindigkeit der Garnführungseinrichtung errechnet, und
- eine Steuereinrichtung (36) mittels des Stellmittels (29) die Garnführungseinrichtung (23) entlang der Ballenumfangsfläche entsprechend der errechneten Vorschubgeschwindigkeit steuert.

## Claims

1. A binding device (18) on a round bale press (7) comprising a press chamber (2, 3) for receiving, bundling and discharging agricultural crop material (6), which is steplessly displaceable by means of an adjusting cylinder (29) and is arranged over an intake gap (19) extending over the entire width of the press chamber (2, 3), comprising a yam guide device (23) which is displaceable on a rail guide in front of and along the intake gap (19) in opposite directions, and a cutting device arranged stationarily in front of the intake gap for cutting off the binding yam (20) after the conclusion of the binding operation,
**characterised in that**
there are provided means for controlling the binding yam distribution in dependence on the peripheral bale speed during the binding operation.

2. A binding device (18) according to claim 1 **characterised in that** the means are formed by at least one adjusting means (29) for guiding the yam guide device (23) along the peripheral bale surface (37) and a control device (36) for actuating the adjusting means.

3. A binding device (18) according to one of the preceding claims **characterised in that** the adjusting means (29) for guiding the yam guide device (23) along the peripheral bale surface (37) is in the form of an electric motor (30).

4. A binding device (18) according to one of the preceding claims **characterised in that** displacement of the yam guide device (23) can be steplessly regulated in dependence on the peripheral bale speed, the measured bale diameter and the desired number of turns of binding yam.

5. A binding device (18) according to one of the preceding claims **characterised in that** the peripheral bale speed of the round bale (7) in the finished pressed condition is detected by at least one sensor and fed as a signal to an electronic evaluation means (38) and said signal can be converted into a computing parameter which can be used to control the yam guide device (23).

6. A binding device (18) according to claim 5 **characterised in that** the computing parameter is the almost actual bale rotary speed of the round bale (7) in the finished pressed condition during the binding operation.

7. A binding device (18) according to one of preceding claims 5 and 6 **characterised in that** the sensor is in the form of a non-driven roller (14) which is in contact with a pressing means and/or a measuring wheel (39) which is in contact with the round bale (7) in the finished pressed condition.

8. A binding device (18) according to one of preceding claims 5 to 7 **characterised in that** the sensor is in the form of a non-driven roller (40) which is in contact with the round bale (7) in the finished pressed condition.

9. A binding device (18) according to one of the preceding claims **characterised in that** the round bale press (1) includes an operating device (35) for setting the desired bale diameter.

10. A binding device (18) according to claim 9 **characterised in that** the operating device (35) is operable from the tractor vehicle of the round bale press (1).

11. A binding device (18) according to one of the preceding claims **characterised in that** the round bale press (1) is provided (2, 3) with a fixed or variable press chamber.

12. A method of controlling the binding yam distribution by means of a binding device (18) on a round bale press (7) having a press chamber (2, 3) for receiving, bundling and discharging agricultural crop material (6), which is steplessly displaceable by means of an adjusting cylinder (29) and is arranged over an intake gap (19) extending over the entire width of the press chamber (2, 3), comprising a yam guide device (23) which is displaceable on a rail guide in front of and along the intake gap (19) in opposite directions, and a cutting device arranged stationarily in front of the intake gap for cutting off the binding yam (20) after the conclusion of the binding operation,
**characterised in that**
the binding yam distribution on the peripheral bale surface (37) of the round bale is controlled in dependence on the peripheral bale speed of the bale in the finished pressed condition.

13. A method according to claim 12 **characterised in that**
- after attainment of a previously defined reference diameter of the round bale (7),
- the at least one sensor continuously ascertains the peripheral bale speed of the round bale (7) in the finished pressed condition,
- an electronic evaluation means (38) detects the ascertained sensor signals and converts same into a computing parameter,
- the electronic evaluation system (38) continuously calculates the advance speed of the yam guide device from the computing parameter, the bale diameter of the round bale (7) in the finished pressed condition, the previously defined number of turns of binding yam and the winding spacing, by means of a selectable algorithm, and
- a control device (36) controls the yam guide device (23) along the peripheral bale surface in accordance with the calculated advance speed by means of the adjusting means (29).

## Revendications

1. Dispositif de liage (18) sur une presse à balles rondes (7) comportant une chambre de pressage (2,3) pour la réception, le bottelage et la délivrance d'un produit agricole de récolte (6), lequel dispositif est déplaçable en continu au moyen d'un vérin de réglage (29) et est disposé au-dessus d'une fente d'introduction (19) s'étendant sur toute la largeur de la chambre de pressage (2, 3), ledit dispositif étant composé d'un dispositif de guidage de fil (23) coulissant en sens contraire sur un guide de coulissement devant et le long de la fente d'introduction (19) et d'un dispositif de coupe disposé en position fixe devant la fente d'introduction pour couper le fil de liage (20) à la fin du processus de liage, **caractérisé en ce qu'**il est prévu des moyens pour commander la répartition du fil de liage en fonction de la vitesse périphérique de balle pendant le processus de liage.

2. Dispositif de liage (18) selon la revendication 1,
**caractérisé en ce que** les moyens sont formés d'au moins un moyen de réglage (29), qui guide le dispositif de guidage de fil (23) le long de la surface périphérique de balle (37), et d'un dispositif de commande (36) qui commande celui-ci.

3. Dispositif de liage (18) selon une des revendications précédentes, **caractérisé en ce que** le moyen de réglage (29) servant à guider le dispositif de guidage de fil (23) le long de la surface périphérique de balle (37) est réalisé sous la forme d'un moteur électrique (30).

4. Dispositif de liage (18) selon une des revendications précédentes, **caractérisé en ce que** le déplacement du dispositif de guidage de fil (23) est réglable en continu en fonction de la vitesse périphérique de balle, du diamètre de balle mesuré ainsi que du nombre d'enroulements de fil de liage souhaité.

5. Dispositif de liage (18) selon une des revendications précédentes, **caractérisé en ce que** la vitesse périphérique de balle de la balle ronde pressée finie (7) est détectée par au moins un capteur et amenée sous forme de signal à une électronique d'évaluation (38), lequel signal peut être converti en une grandeur de calcul qui est utilisable pour la commande du dispositif de guidage de fil (23).

6. Dispositif de liage (18) selon la revendication 5, **caractérisé en ce que** la grandeur de calcul est la vitesse de rotation de balle quasi effective de la balle ronde pressée finie (7) pendant le processus de liage.

7. Dispositif de liage (18) selon une des revendications précédentes 5 ou 6, **caractérisé en ce que** le capteur est réalisé sous la forme d'un rouleau non entraîné (14) en contact avec un moyen de pressage et/ou d'une roue de mesure (39) en contact avec la balle ronde pressée finie (7).

8. Dispositif de liage (18) selon une des revendications précédentes 5 à 7, **caractérisé en ce que** le capteur est réalisé sous la forme d'un rouleau (40) non entraîné en contact avec la balle ronde pressée finie (7).

9. Dispositif de liage (18) selon une des revendications précédentes, **caractérisé en ce que** la presse à balles rondes (1) comprend un dispositif de manoeuvre (35) pour régler le diamètre de balle souhaité.

10. Dispositif de liage (18) selon la revendication 9, **caractérisé en ce que** le dispositif de manoeuvre (35) peut être manoeuvré depuis le véhicule tracteur de la presse à balles rondes (1).

11. Dispositif de liage (18) selon une des revendications précédentes, **caractérisé en ce que** la presse à balles rondes (1) est réalisée avec une chambre de pressage fixe ou variable (2, 3).

12. Procédé pour commander la répartition du fil de liage au moyen d'un dispositif de liage (18) sur une presse à balles rondes (7) équipée d'une chambre de pressage (2, 3) pour la réception, le bottelage et la délivrance d'un produit agricole de récolte (6), lequel dispositif est déplaçable en continu au moyen d'un vérin de réglage (29) et est disposé au-dessus d'une fente d'introduction (19) s'étendant sur toute la largeur de la chambre de pressage (2, 3), ledit dispositif étant composé d'un dispositif de guidage de fil (23) coulissant en sens contraire sur un guide de coulissement devant et le long de la fente d'introduction (19) et d'un dispositif de coupe disposé en position fixe devant la fente d'introduction pour couper le fil de liage (20) à la fin du processus de liage, **caractérisé en ce que** la répartition du fil de liage sur la surface périphérique de balle (37) de la balle ronde est commandée en fonction de la vitesse périphérique de balle de la balle pressée finie.

13. Procédé selon la revendication 12, **caractérisé en ce que**, une fois atteint un diamètre de consigne prédéfini de la balle ronde (7), ledit au moins un capteur détermine continuellement la vitesse périphérique de balle de la balle ronde pressée finie (7), une électronique d'évaluation (38) capte les signaux de capteur déterminés et les convertit en une grandeur de calcul, l'électronique d'évaluation (38) calcule continuellement, à partir de la grandeur de calcul, du diamètre de balle de la balle ronde pressée finie (7), du nombre prédéfini d'enroulements de fil de liage ou de la distance prédéfinie entre spires, la vitesse d'avance du dispositif de guidage de fil au moyen d'un algorithme librement choisi, et un dispositif de commande (36) commande à l'aide du moyen de réglage (29) le dispositif de guidage de fil (23) le long de la surface périphérique de balle en fonction de la vitesse d'avance calculée.
